# EUROPEAN PATENT APPLICATION

(11) **EP 4 391 175 A1**
(43) Date of publication of application: **26.06.2024**
(21) Application number: 22215161.5
(22) Date of filing: 20.12.2022
(51) Int. Cl.: H01M 50/242, H01M 50/247, H01M 50/262, F16F 1/02, B26B 19/00, B26B 21/00

(54) **A LOCK SPRING, A PERSONAL CARE APPARATUS, AND A METHOD OF ASSEMBLY**

(71) Applicant: Koninklijke Philips N.V., 5656 AG Eindhoven (NL)
(72) Inventor: TENUTA MARTINS, Júlia, 5656AG Eindhoven (NL); SAPDHARE, Varun Devidas, 5656AG Eindhoven (NL); ROETERT, Rob, 5656AG Eindhoven (NL)
(74) Representative: Philips Intellectual Property & Standards

(57) **Abstract**

The subject-matter of the present disclosure relates to a lock spring (18) for securing a battery frame (16) to a housing (14) in a personal care apparatus assembly (10). The lock spring comprises: a plurality of anchor points (36) for engaging a respective plurality of anchor formations on each of the battery frame and the housing, in-use; a plurality of pinching tabs, each pinching tab of the plurality of pinching tabs (38) configured for engaging a finger digit of a user, in-use; a resilient structure linking together the plurality of anchor points and extending in a plane (P), the resilient structure configured to deform in response to an external force applied to the plurality of pinching tabs by the finger digits to reduce a separation distance (D) between first and second anchor points of the plurality of anchor points, in-use. Each anchor point of the plurality of anchor points comprises a reinforcing portion extending out of the plane.

## Description

### FIELD OF THE INVENTION

The subject-matter of the present disclosure relates to the field of personal care apparatuses. More specifically, the subject-matter described herein relates to a lock spring, a personal care apparatus assembly, and a method of assembling a personal care apparatus.

### BACKGROUND OF THE INVENTION

Personal care apparatus assemblies may include a housing, a battery frame for supporting a battery inside the housing, and a lock spring for securing the housing and the battery frame together. In this way, the lock spring reduces axial movement of the battery frame relative to the housing, in-use.

However, in certain circumstances, the relative forces can be substantial. For instance, if the personal care apparatus is dropped on its end, the inertia of the battery may result in excessive forces from the battery frame. Such excessive forces can result in damage to the lock spring, or to the housing and battery frame.

It is an aim of the subject-matter of the present disclosure to improve on the prior art.

### SUMMARY OF THE INVENTION

According to a first aspect of the present invention, there is provided a lock spring for securing a battery frame to a housing in a personal care apparatus assembly. The lock spring comprises: a plurality of anchor points for engaging a respective plurality of anchor formations on each of the battery frame and the housing, in-use; a plurality of pinching tabs, each pinching tab of the plurality of pinching tabs configured for engaging a finger digit of a user, in-use; a resilient structure linking together the plurality of anchor points and extending in a plane, the resilient structure configured to deform in response to an external force applied to the plurality of pinching tabs by the finger digits to reduce a separation distance between first and second anchor points of the plurality of anchor points, in-use, wherein each anchor point of the plurality of anchor points comprises a reinforcing portion extending out of the plane.

In this way, the reinforcing portion prevents damage to the lock spring in the event of excessive forces such as dropping the personal care device.

In an embodiment, the plurality of anchor points may comprise a third anchor point, and wherein the resilient structure may comprise a first resilient arm connecting the first anchor point to the third anchor point, and a second resilient arm connecting the second anchor point to the third anchor point.

In an embodiment, the first and second resilient arms may be curved outwardly within the plane. In this way, the lock spring has a larger contact area with the battery frame.

In an embodiment, each anchor point of the plurality of anchor points may be configured to extend outwardly in the plane.

In an embodiment, the reinforcing portion may be configured to extend away from the battery frame towards an assembly cap of the personal care apparatus assembly, in-use.

In this way, the reinforcing portion may extend substantially orthogonally from plane. Such a configuration provides a larger opposing reactive force compared to other orientations of extension, in the event the personal care apparatus is dropped.

In an embodiment, the lock spring may be made from a single piece of wire.

In an embodiment, the reinforcing portion may be formed as a bent section of the single piece of wire. A single piece of wire is simple to manufacture.

In an embodiment, each pinching tab of the plurality of pinching tabs extends substantially orthogonally from the plane. In this way, the pinching tabs are easier for a user to grip.

According to a further aspect of the present disclosure, there is provided a personal care apparatus assembly comprising: a battery frame for housing a battery and for securing a motor within the personal care apparatus assembly, the battery frame comprising a plurality of anchor formations; a housing co-operable with the battery frame for hermetically sealing the battery and the motor from an external environment, the housing comprising a plurality of anchor formations; and the lock spring of any preceding aspect or embodiment, wherein the plurality of anchor points is configured to engage the respective pluralities of anchor points of the battery frame and the housing to limit axial movement of the battery frame with respect to the housing, in-use.

In an embodiment, the battery frame comprises a rib adjacent to each anchor formation configured for receiving the first and second anchor points, wherein the ribs are configured to engage the lock spring to limit the separation distance, in-use. Limiting the separation distance prevents the lock spring getting stuck within the assembly and prevents wear on other parts of the battery frame or housing.

In an embodiment, the battery frame may comprise a holding tab for pivotably holding the third anchor point during installation or removal of the lock spring, in-use. Pivotably holding the lock spring makes installation and disassembly more intuitive and improves repeatability.

In an embodiment, the battery frame may further comprise a pillar located at either side of one of the anchor formations, configured for receiving the third anchor point, to contact the lock spring to limit the separation distance, in-use. Limiting the separation distance prevents the lock spring getting stuck within the assembly and prevents wear on other parts of the battery frame or housing.

In an embodiment, the battery frame may comprise a screw pillar extending axially away from the battery frame, the screw pillar may include a screw hole for screwing the end cap to an assembly cap, wherein the battery frame may comprise a ramp at either side of the screw pillar and extending up the screw pillar to prevent the lock spring contacting the screw pillar, in-use. Preventing the lock spring from contacting the screw pillar prevents the lock spring gripping the screw pillar during disassembly. Another benefit is that the ramps guide the lock spring away from the battery frame during disassembly and guide the lock spring towards the battery frame during assembly.

According to another aspect of the present disclosure, there is provided a method of assembling a personal care apparatus, the method comprising: providing the personal care apparatus assembly of any of the preceding aspects or embodiments; applying the external force to the plurality of pinching tabs to reduce the separation distance between the first and second anchor points; moving the first and second anchor points adjacent to the anchor formations configured for receiving them on each of the housing and the battery frame; and releasing the clamping force.

These and other aspects of the present invention will be apparent from and elucidated with reference to the embodiment(s) described hereinafter.

### BRIEF DESCRIPTION OF THE DRAWINGS

The embodiments of the present inventions may be best understood with reference to the accompanying figures, in which:
Fig. 1 shows a cross-section schematic view of a personal care apparatus assembly according to one or more embodiments;
Fig. 2 shows a perspective view of the personal care apparatus assembly from Fig. 1;
Fig. 3 shows a similar view to Fig. 2;
Fig. 4 shows a lock spring from the personal care apparatus assembly from Fig. 1, according to one or more embodiments;
Figs. 5A, 5B, and 5C, show respective end, top, and side, projections of the lock spring from Fig. 4;
Fig. 6 shows a cross-section view of a part of the personal care apparatus assembly from Fig. 1;
Fig. 7 shows a perspective view of the part of personal care apparatus assembly from Fig. 6;
Figs. 8A to 8E show perspective views of the personal care apparatus assembly from Fig. 1 in various stages of assembly;
Fig. 9 shows a flow chart with a process of disassembling the personal care apparatus assembly from Fig. 1, according to one or more embodiments; and
Fig. 10 shows a flow chart with a process of assembling the personal care apparatus assembly from Fig. 1, according to one or more embodiments.

### DETAILED DESCRIPTION OF THE EMBODIMENTS

Various combinations of optional features have been described herein, and it will be appreciated that described features may be combined in any suitable combination. In particular, the features of any one example embodiment may be combined with features of any other embodiment, as appropriate, except where such combinations are mutually exclusive. Throughout this specification, the term "comprising" or "comprises" means including the component(s) specified but not to the exclusion of the presence of others.

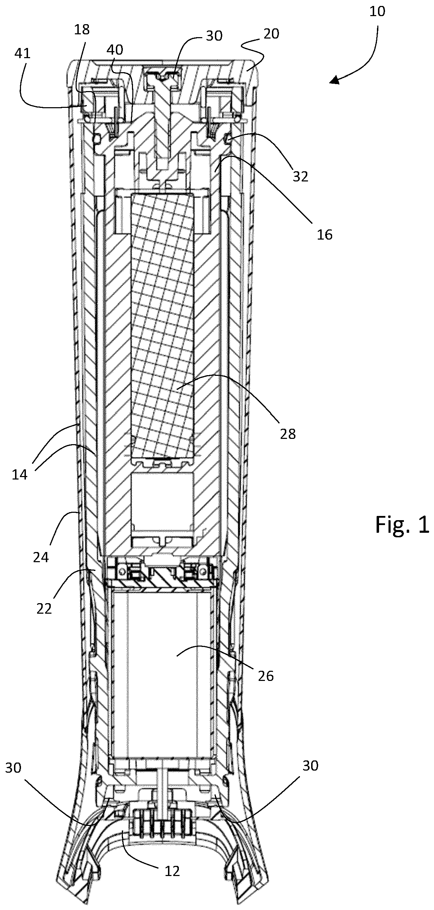

With reference to Fig. 1, a personal care apparatus assembly 10 (or merely assembly) includes an appliance 12, a housing 14, a battery frame 16, a lock spring 18, and an assembly cap 20. The housing 14 may include an inner tube 22 and an outer tube 24. Within the assembly 10 is a motor 26 and a battery 28.

Personal care apparatuses are well known in the art and involve grooming devices, but also cleaning devices, skin treatment devices, hair removal devices, massage devices, etc. Generally, personal care devices perform a treatment or an operation to a human or animal body.

Hair cutting devices and hair grooming devices are well-known in the art and may comprise, for instance, shavers, trimmers, epilators, hair styling devices, and combinations thereof. Typically, hair grooming devices comprise an electric motor that is arranged to drive a cutting unit, for instance a blade set, so as to effect a hair cutting and/or hair grooming operation. More generally, hair cutting devices may also be referred to as grooming devices.

The appliance 12 comprises a device for use in performing the function of the personal care apparatus. For example, in the event that the personal care apparatus is a shaver, the appliance may be a cutting unit, for instance, a blade set, for shaving hair.

As described above, the housing 14 may include the inner tube 22 and the outer tube 24. In other embodiments, the inner tube 22 and the outer tube 24 may be replaced with a different number of tubes, e.g. a single tube, or three or more tubes.

In general, the housing 14 generally is co-operable with the battery frame 16 for hermetically sealing the battery and the motor from an external environment. In this embodiment, the inner tube 22 cooperates with the battery frame 16 to hermetically seal the motor 26 and the battery 28 from an external environment. The outer tube 24 may act to provide a structural support to the inner tube and prevent damage to components inside the assembly as a result of impacts, for example.

The inner tube 22 and the outer tube 24 are substantially hollow and substantially tubular in shape. In other embodiments, they may have a different shape. The appliance 12 is coupled to one end of the outer tube 24. The inner tube 22 open at both ends. A proximal end of the inner tube may be attached to the appliance. The inner tube 22 is connected to the appliance 12 by means of an attaching means 30. The attaching means 30 may comprise a screw, or a plurality of screws.

The motor 26 fits within the inner tube 22. This is shown schematically in Fig. 1.

The battery frame 16 may be substantially tubular. In other embodiments, it may have a different shape. The battery frame 16 may be for housing the battery 28 and for securing the motor 26 within the personal care apparatus assembly 10. In this way, the battery 28 can be removed by removing the battery frame 16. The battery frame 16 may have opposing ends. The ends may be substantially disc shaped, and may be referred to as end caps 40. The battery frame 16 may include a rim 41 around the distal end cap 40. The battery frame 16 may be sized for clearance fit with the inner tube 22. A sealing member 32 may be provided between the inner tube 22 and the battery frame 16. The sealing member 32 may help to reduce moisture from permeating from another end of the apparatus to the motor within the housing 14.

The lock spring 18 is suitable for securing the battery frame to the housing 14 in the personal care apparatus assembly 10.

The assembly cap 20 is a substantially disc shaped member connected to the closed end of the battery frame 16 using an attaching means 30. The attaching means 30 may be a screw, for example.

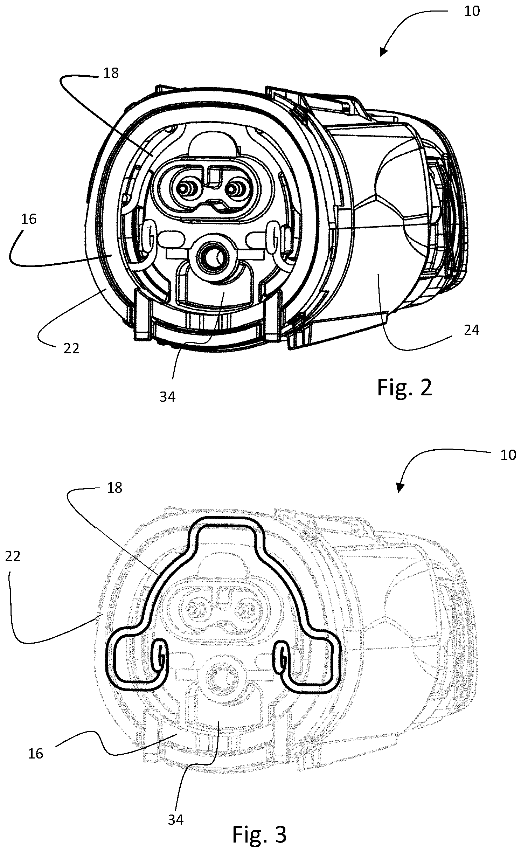

In Fig. 2, the assembly 10 is shown from the perspective of the distal end thereof, i.e. the distal end to the appliance 12. A closed end 34 of the battery frame 16 is shown in addition to the lock spring 18, the inner tube 22 and the outer tube 24.

In Fig. 3, the assembly 10 is shown from the same perspective as Fig. 2, but where the entire lock spring is shown and the inner tube 22 is faded.

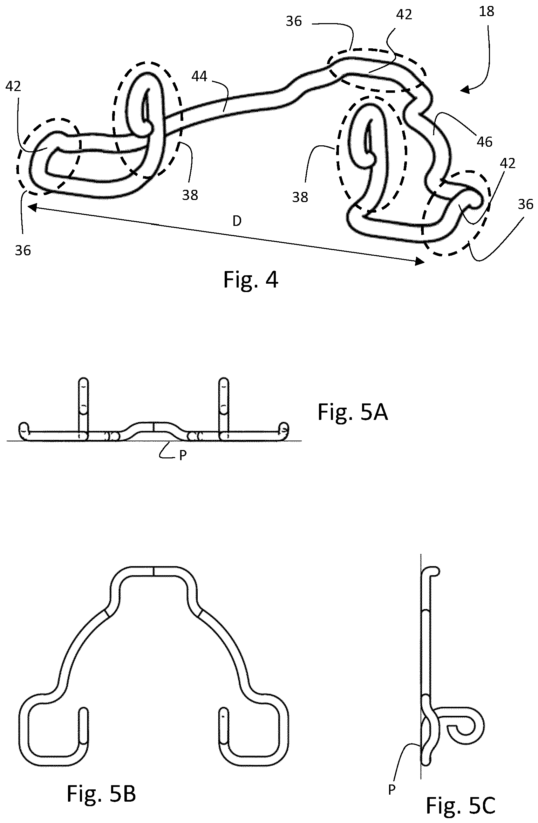

With reference to Fig. 4, the lock spring 18 includes a plurality of anchor points 36 for engaging a respective plurality of anchor formations on each of the battery frame 16 and the housing 14, in-use. The lock spring may be single piece of wire. The lock spring 18 includes a plurality of pinching tabs 38, each pinching tab of the plurality of pinching tabs 38 being configured for engaging a finger digit of a user, in-use. For this reason, the pinching tabs 38 include a loop. In some embodiments, there may be two pinching tabs 38. One of the two pinching tabs 38 may be suitable for engaging a thumb and the other may be suitable for engaging an index finger.

The two pinching tabs 38 are each coupled to a different anchor point 36, e.g. first and second anchor points 36. The anchor points to which the pinching tabs 38 are connected are not directly connected together.

The lock spring 18 includes a resilient structure linking together the plurality of anchor points 36. The resilient structure extends in a plane. The resilient structure is configured to deform in response to an external force applied to the pinching tabs 38 by the finger digits to reduce a separation distance D between the first and second anchor points 38, in-use.

Each pinching tab 38 extends from the plane, and preferably extends substantially orthogonally to the plane. In-use, the pinching tabs 38 may extend away from the battery frame 16, and in particular, away from the battery 28 held by the battery frame 16.

The anchor points 36 may each comprise a reinforcing portion 42. The reinforcing portions 42 may extend out of the plane. The reinforcing portions 42 may extend substantially orthogonally to the plane. In-use, the reinforcing portion is configured to extend away from the battery frame towards the assembly cap 40. In this way, the reinforcing portions 42 may extend in a same direction as the pinching tabs 38. The reinforcing portions 42 may be formed as a bent second of the single piece of wire. In this way, the reinforcing portions 42 may provide a degree of resilient against axial forces such as the battery inertia forcing outwards in the event of the assembly being dropped on its distal end.

In the specific embodiment shown in Fig. 4, the plurality of anchor points 36 comprises a third anchor point, and the resilient structure comprises a first resilient arm 44 connecting the first anchor point to the third anchor point, and a second resilient arm 46 connecting the second anchor point to the third anchor point. The first and second resilient arms may be curve outwardly within the plane.

Each anchor point 36 may be configured to extend outwardly in the plane compared to the resilient structure.

With reference to Figs. 5A to 5C, the lock spring 18 is shown in three perspectives, namely an end view, a top view, and a side view.

The plane P is shown in the end view and the side view of respective Figs. 5A and 5C.

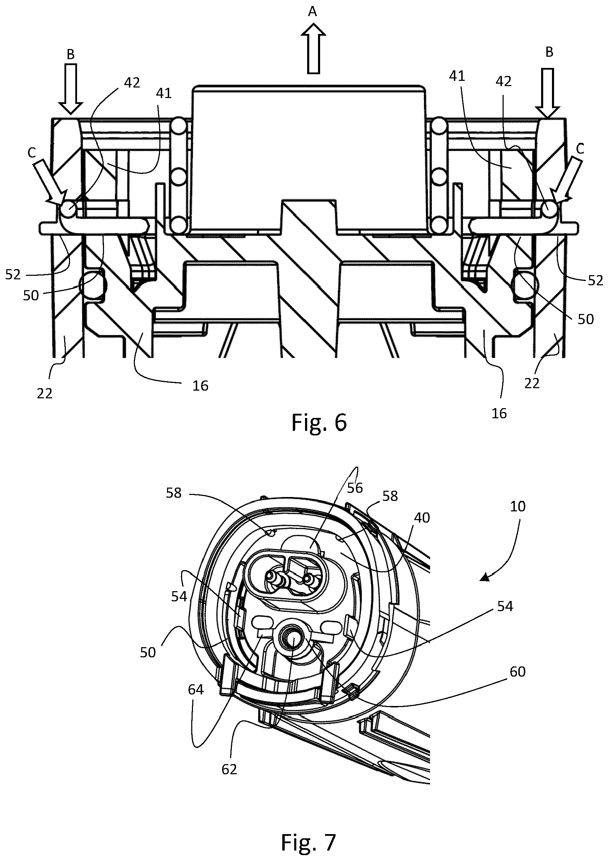

In Fig. 6, a part of the assembly is shown, and specifically the distal end of the assembly is shown. With reference to Fig. 6, two of the mounting formations 50 of the battery frame 16 and two of the mounting formations 52 of the inner tube 22 are dimensioned and configured to receive the first and second anchor points 36. The mounting formations 50 of the battery frame 16 are provided through as hole through the rim 41. The mounting formations 52 of the inner tube 22 are provided as holes through therethrough, and more specifically through a side wall thereof. In the event that the assembly is dropped on the assembly cap (Fig. 1), Force B may be exerted on the inner tube 22. In addition, those forces exist residually purely because parts are being held together and not just because there is an external force due to dropping. In this way, the reinforcing portion 42 fills any gaps in the total dimensional tolerances of the entire assembly. The inertia of the battery causes force A to act on the battery frame 16. As a result, a force C acts on the anchor points 36. The force C has at least a component force acting in the same direction as the force B. In this way, the reinforcing portion 42 or reinforcing member extending substantially orthogonally to the plane extends parallel and in an opposite direction to forces B. In this way, the reinforcing portion limits axial movement of the battery frame 16 with respect to the housing, in-use. Because the reinforcing portion 42 is made from the bend in the wire, the reinforcing portion 42 has resilience. In this way, the reinforcing portion 42 may deform elastically rather than plastically in response to the force B.

In Fig. 7, the distal end of the assembly 10 is shown as a perspective view. The battery frame 16 includes the anchor formations 50. The battery frame 16 also includes a rib 54 adjacent to each anchor formation that is configured to receive the first and second anchor points 36. The ribs are configured to engage the lock spring to limit the separation distance D.

The battery frame 16 includes a holding tab 56 for pivotably holding the third anchor point during installation or removal of the lock spring 18. The battery frame 16 further comprises a pillar 58 located at either side of one of the anchor formations configured for receiving the third anchor point 36. The pillar 58 contacts the lock spring 18 to limit the separation distance D.

The battery frame 16 includes a screw pillar 60 extending axially away from the battery frame. The screw pillar 60 includes a screw hole 62 for receiving the screw that screws the end cap 40 to the assembly cap 20 (see Fig. 1). The battery frame 16 may comprise a ramp 64 at either side of the screw pillar 60 to prevent the lock spring 18 from contacting the screw pillar, in-use.

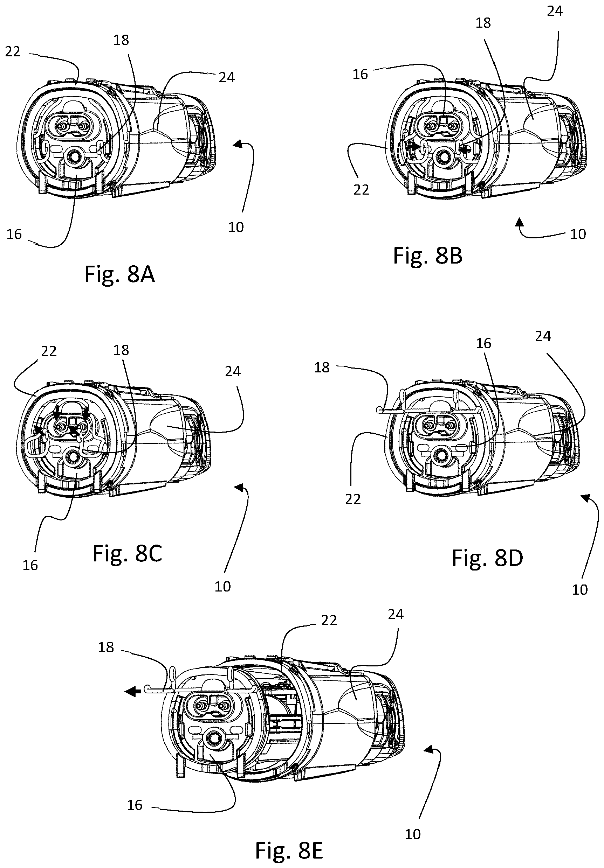

With reference to Figs. 8A to 8E, the personal care apparatus assembly 10 may be disassembled according to a plurality of assembly steps. The disassembly steps include providing the assembled assembly as shown in Fig. 8A. In Fig. 8B, a user applies an external force to the plurality of pinching tabs to reduce the separation distance between the first and second anchor points. In Fig. 8C, the lock spring 18 is moved to remove the third anchor point from its anchor formations. Movement of the lock spring 18 is continued until the third anchor point is located behind the holding tab 56, such that the holding tab pivotably holds the third anchor point. Next, with reference to Fig. 8D, the lock spring 18 is pivoted about the third anchor point which is held by the holding tab 56. In this way, the first and second anchor points are moved away from the battery frame 16. In addition, the external force is removed to revert the separation distance to normal position. With reference to Fig. 8E, the lock spring 18 is pulled to remove the battery frame from the inner tube 22 by a pulling force. After removal, the lock spring may then be moved to remove the third anchor point 36 from the holding tab 56.

The method of assembling the personal care apparatus assembly involves the reverse sequence of steps outlined in relation to Figs. 8A to 8E.

For example, the method of assembling the personal care apparatus comprises applying the external force to reduce the separation distance. Then the lock spring 18 is moved such that the third anchor point is pivotably held by the holding tab 56. Then, the lock spring 18 is pivoted such that the lock spring 18 lies flush with the end cap of the battery frame 16. Then, the third anchor point is moved to within the respective anchor formations of the inner tube 22. Then, the external force is released such that the separation distance increases to its normal distance and the first and second anchor formations engage the respective anchor formations of the inner tube 22.

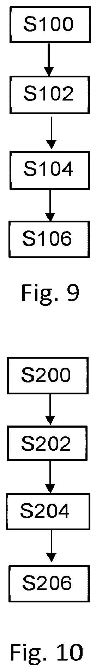

The method of disassembling the assembly may be summarised with reference to Fig. 9.

The method of disassembling the assembly may be summarised as a method of disassembling the personal care apparatus assembly, the method comprising: providing S100 the personal care apparatus assembly; applying S 102 the external force to the plurality of pinching tabs to reduce the separation distance between the first and second anchor points; moving S 104 the first and second anchor points away from the anchor formations; and releasing S 106 the clamping force.

The method of assembly may be summarised with reference to Fig. 10. The method of assembling a personal care apparatus assembly, the method comprising: providing S200 the personal care apparatus assembly; applying S202 the external force to the plurality of pinching tabs to reduce the separation distance between the first and second anchor points; moving S204 the first and second anchor points adjacent to the anchor formations configured for receiving them on each of the housing and the battery frame; and releasing S206 the clamping force.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. Any reference signs in the claims should not be construed as limiting the scope.

## Claims

1. A lock spring (18) for securing a battery frame (16) to a housing (14) in a personal care apparatus assembly (10), the lock spring (18) comprising:
a plurality of anchor points (36) for engaging a respective plurality of anchor formations on each of the battery frame and the housing, in-use;
a plurality of pinching tabs (38), each pinching tab of the plurality of pinching tabs configured for engaging a finger digit of a user, in-use;
a resilient structure linking together the plurality of anchor points and extending in a plane (P), the resilient structure configured to deform in response to an external force applied to the plurality of pinching tabs by the finger digits to reduce a separation distance (D) between first and second anchor points of the plurality of anchor points, in-use,
wherein each anchor point of the plurality of anchor points comprises a reinforcing portion (42) extending out of the plane.

2. The lock spring of Claim 1, wherein the plurality of anchor points comprises a third anchor point, and wherein the resilient structure comprises a first resilient arm (44) connecting the first anchor point to the third anchor point, and a second resilient arm (46) connecting the second anchor point to the third anchor point.

3. The lock spring of Claim 2, wherein the first and second resilient arms are curved outwardly within the plane.

4. The lock spring of any preceding claim, each anchor point of the plurality of anchor points is configured to extend outwardly in the plane.

5. The lock spring of any preceding claim, wherein the reinforcing portion is configured to extend away from the battery frame towards an assembly cap of the personal care apparatus assembly, in-use.

6. The lock spring of any preceding claim, wherein the reinforcing portion extends substantially orthogonally from plane.

7. The lock spring of any preceding claim, made from a single piece of wire.

8. The lock spring of Claim 7 wherein the reinforcing portion is formed as a bent section of the single piece of wire.

9. The lock spring of any preceding claim, wherein each pinching tab of the plurality of pinching tabs extends substantially orthogonally from the plane.

10. A personal care apparatus assembly comprising:
a battery frame for housing a battery and for securing a motor (26) within the personal care apparatus assembly, the battery frame comprising a plurality of anchor formations;
a housing co-operable with the battery frame for hermetically sealing the battery and the motor from an external environment, the housing comprising a plurality of anchor formations; and
the lock spring of any preceding claim, wherein the plurality of anchor points is configured to engage the respective pluralities of anchor points of the battery frame and the housing to limit axial movement of the battery frame with respect to the housing, in-use.

11. The personal care apparatus assembly of Claim 10, wherein the battery frame comprises a rib (54) adjacent to each anchor formation configured for receiving the first and second anchor points, wherein the ribs are configured to engage the lock spring to limit the separation distance, in-use.

12. The personal care apparatus assembly of Claim 10 or Claim 11, wherein, when the lock spring is the lock spring of Claim 2 or any claim dependent thereon, the battery frame comprises a holding tab for pivotably holding the third anchor point during installation or removal of the lock spring, in-use.

13. The personal care apparatus assembly of any of Claims 10 to 12, wherein, when the lock spring is the lock spring of Claim 2 or any claim dependent thereon, the battery frame further comprises a pillar located at either side of one of the anchor formations, configured for receiving the third anchor point, to contact the lock spring to limit the separation distance, in-use.

14. The personal care apparatus assembly of any of Claims 10 to 12, wherein the battery frame comprises a screw pillar extending axially away from the battery frame, the screw pillar including a screw hole for screwing the end cap to an assembly cap, wherein the battery frame comprises a ramp at either side of the screw pillar and extending up the screw pillar to prevent the first and second anchor points contacting the screw pillar, in-use.

15. A method of assembling a personal care apparatus, the method comprising:
providing (S200) the personal care apparatus assembly of any of Claims 10 to 14;
applying (S202) the external force to the plurality of pinching tabs to reduce the separation distance between the first and second anchor points;
moving (S204) the first and second anchor points adjacent to the anchor formations configured for receiving them on each of the housing and the battery frame; and
releasing (S206) the clamping force.
